# EUROPEAN PATENT APPLICATION

(11) **EP 4 711 047 A1**
(43) Date of publication of application: **18.03.2026**
(21) Application number: 24831750.5
(22) Date of filing: 17.06.2024
(51) Int. Cl.: B05B 9/04, B05B 13/02

(54) **DOUBLE-SIDED TREATMENT DEVICE, DOUBLE-SIDED TREATMENT METHOD, AND METHOD FOR PRODUCING SINTERED BODY**

(30) Priority: 26.06.2023 JP 2023103917
(71) Applicant: Niterra Materials Co., Ltd., Yokohama-shi, Kanagawa 235-0032 (JP)
(72) Inventor: AKIYA, Suguru, Yokohama-shi, Kanagawa 235-0032 (JP); ICHIKAWA, Hiroshi, Yokohama-shi, Kanagawa 235-0032 (JP); AKIMOTO, Toshiya, Yokohama-shi, Kanagawa 235-0032 (JP); KONDO, Hiroyasu, Yokohama-shi, Kanagawa 235-0032 (JP)
(74) Representative: Hoffmann Eitle
(86) International application number: PCT/JP2024/021876
(87) International publication number: WO 2025/004887

(57) **Abstract**

A double-sided treatment device according to an embodiment adheres a release agent to two surfaces of a ceramic green sheet. The double-sided treatment device includes a first conveyance mechanism, a first treatment part, a first roller part, a second roller part, a second conveyance mechanism, and a second treatment part. The first conveyance mechanism moves the ceramic green sheet in a first direction. The first treatment part adheres the release agent to a first surface of the ceramic green sheet conveyed by the first conveyance mechanism. The first roller part is located at an end part in the first direction of the first conveyance mechanism, and changes a movement direction of the ceramic green sheet to a second direction crossing the first direction. The second roller part changes the movement direction of the ceramic green sheet that moved in the second direction to an opposite direction of the first direction. The second conveyance mechanism moves the ceramic green sheet in the opposite direction. The second treatment part adheres the release agent to a second surface of the ceramic green sheet conveyed by the second conveyance mechanism.

## Description

### [Technical Field]

Embodiments relate to a double-sided treatment device, a double-sided treatment method, and a method for producing a sintered body in which a release agent is adhered to two surfaces of a ceramic green sheet.

### [Background Art]

Patent Literature 1 describes a method for producing a ceramic substrate. According to the production method, multiple green sheets are stacked and sintered with a separating material interposed. Subsequently, multiple ceramic substrates are produced by separating the multiple sintered bodies. In the invention described in Patent Literature 1, a separating material of boron nitride powder is adhered to one or two surfaces of the green sheet after the green sheet is cut. Subsequently, multiple silicon nitride sintered bodies are obtained by stacking and sintering the multiple green sheets, and then by separating.

Patent Literature 2 discusses a device that applies a coating to two surfaces of a sheet. According to the invention described in Patent Literature 2, a coating is applied with a coater to one surface of a sheet and dried, and then a coating is applied with a coater to the other surface and dried. In this device, a mechanism that vertically inverts the sheet is located between the first dryer and the second coater.

Patent Literature 3 discusses a device that applies an active material to two surfaces of an electrode foil. According to the invention described in Patent Literature 3, a front coating spray device, a back coating spray device, a front hot-air jetting tube, and a back hot-air jetting tube are provided to apply the active material of the electrode foil for a battery; and the active material can be applied without changing the setup of the electrode foil front and back.

### [Prior Art Documents]

### [Patent Literature]

Patent Literature 1: Japanese Patent No. 5339214
Patent Literature 2: JP-A S62-279865 (Kokai)
Patent Literature 3: Utility Model No. 3019021

### [Summary of Invention]

### [Problem to be Solved by the Invention]

A green sheet of a ceramic substrate is produced by mixing an organic binder with a ceramic powder and by drying the ceramic powder and the organic binder. Such a ceramic green sheet does not have the strength of a resin film or a metal foil, and is easily damaged when tension is applied. Conventionally, to reduce waste of a ceramic green sheet, a release agent was adhered to two surfaces of the ceramic green sheet after cutting the ceramic green sheet into a prescribed shape. However, in recent years, ceramic substrates have become thinner, and ceramic green sheets have become thinner accordingly. The handling of a thin, soft ceramic green sheet without causing damage is difficult and time consuming. Therefore, there is a need for technology that can adhere a release agent to two surfaces of a ceramic green sheet while suppressing damage of the ceramic green sheet.

### [Means for Solving the Problem]

A double-sided treatment device according to an embodiment adheres a release agent to two surfaces of a ceramic green sheet. The double-sided treatment device includes a first conveyance mechanism, a first treatment part, a first roller part, a second roller part, a second conveyance mechanism, and a second treatment part. The first conveyance mechanism moves the ceramic green sheet in a first direction. The first treatment part adheres the release agent to a first surface of the ceramic green sheet conveyed by the first conveyance mechanism. The first roller part is located at an end part in the first direction of the first conveyance mechanism, and changes a movement direction of the ceramic green sheet to a second direction crossing the first direction. The second roller part changes the movement direction of the ceramic green sheet that moved in the second direction to an opposite direction of the first direction. The second conveyance mechanism moves the ceramic green sheet in the opposite direction. The second treatment part adheres the release agent to a second surface of the ceramic green sheet conveyed by the second conveyance mechanism.

### [Brief Description of Drawings]

[FIG. 1]

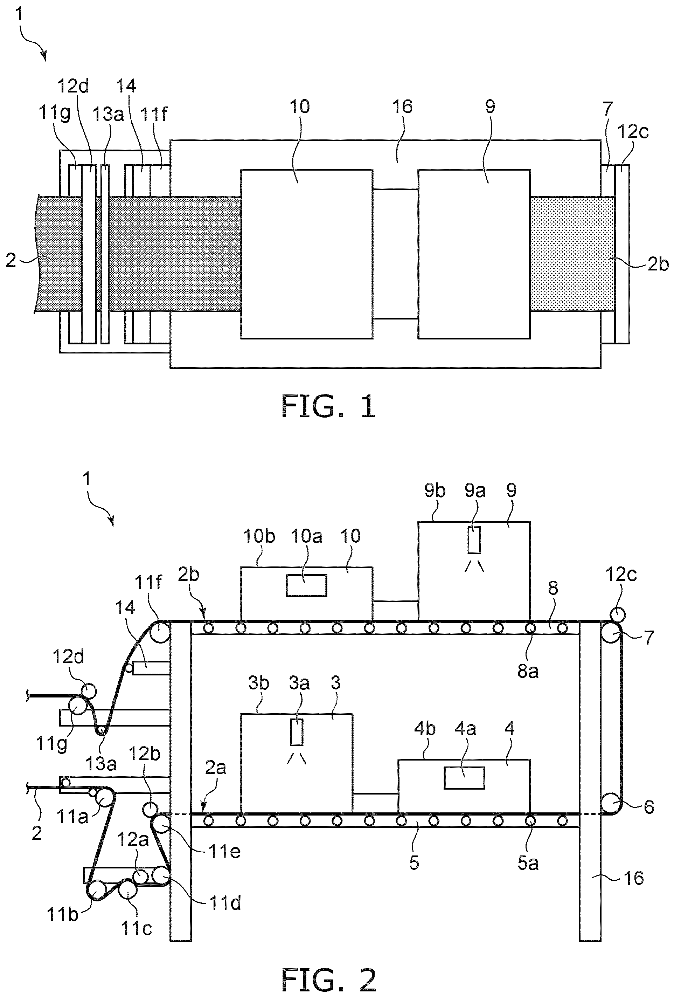

   FIG. 1 is a plan view of a double-sided treatment device according to an embodiment.
[FIG. 2]
   FIG. 2 is a cross-sectional view of the double-sided treatment device according to the embodiment.
[FIG. 3]

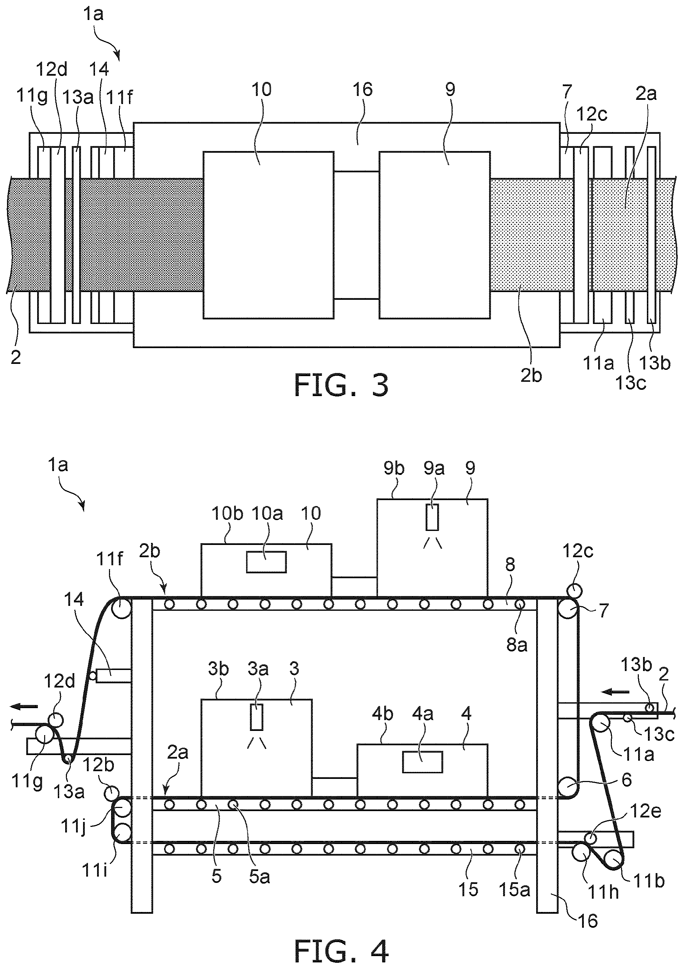

   FIG. 3 is a plan view of another double-sided treatment device according to an embodiment.
[FIG. 4]
   FIG. 4 is a cross-sectional view of the other double-sided treatment device according to the embodiment.
[FIG. 5]

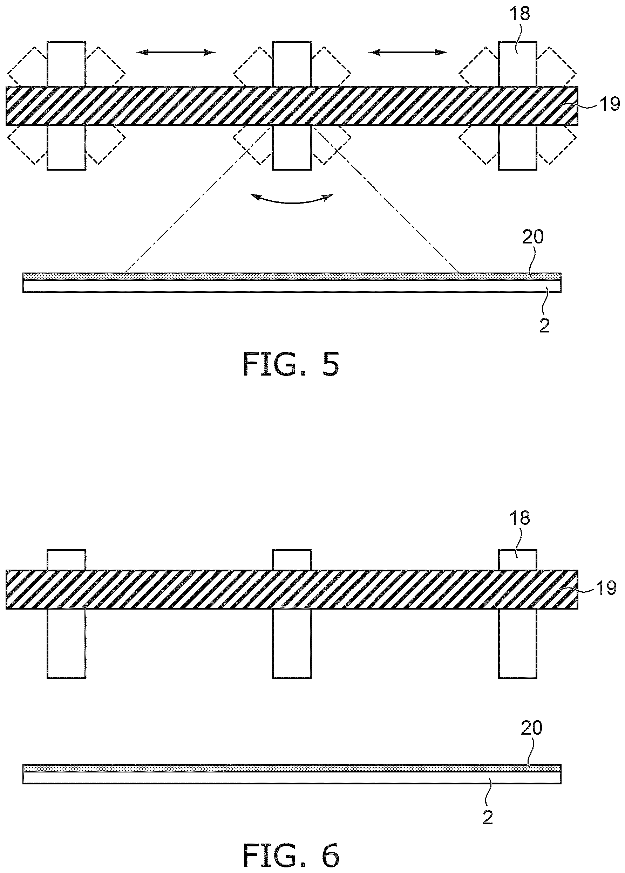

   FIG. 5 is a schematic view showing an example of spraying.
[FIG. 6]
   FIG. 6 is a schematic view showing another example of spraying.
[FIG. 7]

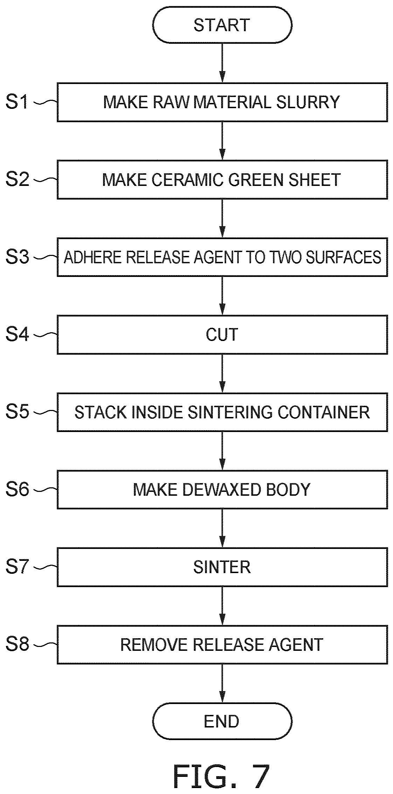

   FIG. 7 is a flowchart showing a method for producing a sintered body according to an embodiment.
[FIG. 8]

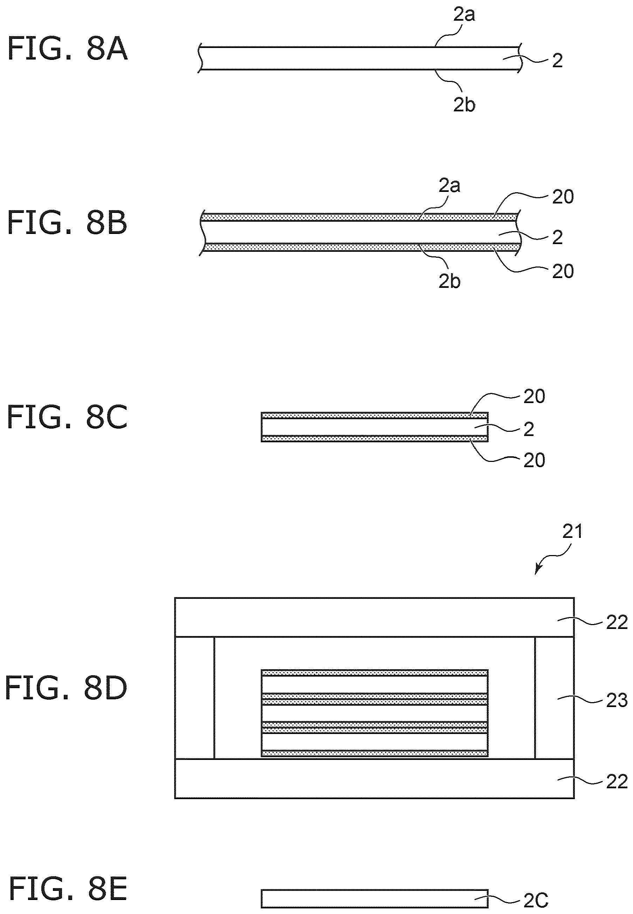

   FIG. 8 is a cross-sectional view showing production processes of a sintered body according to an embodiment.

### [Description of Embodiments]

A double-sided treatment device according to an embodiment adheres a release agent to two surfaces of a ceramic green sheet. The double-sided treatment device includes a first conveyance mechanism, a first treatment part, a first roller part, a second roller part, a second conveyance mechanism, and a second treatment part. The first conveyance mechanism moves the ceramic green sheet in a first direction. The first treatment part adheres the release agent to a first surface of the ceramic green sheet conveyed by the first conveyance mechanism. The first roller part is located at an end part in the first direction of the first conveyance mechanism, and changes a movement direction of the ceramic green sheet to a second direction crossing the first direction. The second roller part changes the movement direction of the ceramic green sheet that moved in the second direction to an opposite direction of the first direction. The second conveyance mechanism moves the ceramic green sheet in the opposite direction. The second treatment part adheres the release agent to a second surface of the ceramic green sheet conveyed by the second conveyance mechanism.

Embodiments of the invention will now be described with reference to the drawings. The drawings are schematic or conceptual; and the relationships between the thickness and width of portions, the proportions of sizes among portions, etc., are not necessarily the same as the actual values. Also, the dimensions and proportions may be illustrated differently among drawings, even when the same portion is illustrated. In the specification and drawings, components similar to those already described are marked with the same reference numerals; and a detailed description is omitted as appropriate.

A ceramic green sheet is a thin ceramic sintered body such as a ceramic substrate, etc., in a state before sintering. The ceramic green sheet is made of a ceramic raw material powder, a sintering aid powder, and an organic material. The ceramic raw material powder is the main component of the ceramic substrate. The sintering aid powder is added to sinter the ceramic raw material. The organic material is a resin or the like, and is used to form the powder into a sheet form. A ceramic green sheet is produced by mixing the powders and the organic material in a solvent, forming the mixture into a sheet form, and drying the compact. Because the ceramic green sheet is soft, the ceramic green sheet can be easily cut with a blade such as a cutter, etc., but its lack of strength causes it to be easily damaged when tension or other forces are applied.

The ceramic substrate that is produced with the release agent adhered to two surfaces is favorably one selected from an aluminum nitride substrate, an aluminum oxide substrate, and a silicon nitride substrate. An Alusil substrate is an example of one type of aluminum oxide substrate. Alusil is a sintered body with 20 to 80 wt% aluminum oxide and a remainder of zirconium oxide. The three-point bending strength of an aluminum nitride substrate or an aluminum oxide substrate is about 300 to 450 MPa. The strength of an Alusil substrate is about 550 MPa. The thermal conductivity of aluminum nitride is not less than 170 W/(m·K), and can be further increased to not less than 200 W/(m·K). The thermal conductivity of aluminum oxide is 20 W/(m·K). It is favorable for the thicknesses of aluminum nitride and aluminum oxide to be not more than 0.8 mm, and more favorably not more than 0.635 mm. The three-point bending strength of a silicon nitride substrate is not less than 600 MPa, and can be further increased to not less than 700 MPa. The thermal conductivity of a silicon nitride substrate is not less than 50 W/(m·K), and can be further increased to not less than 80 W/(m·K). In particular, in recent years, there is also a silicon nitride substrate having both high strength and high thermal conductivity. Due to its high strength, the silicon nitride substrate can be made thinner, and its heat dissipation can be further increased. It is therefore favorable for the thickness of the silicon nitride substrate to be not more than 0.635 mm, and more favorably not more than 0.3 mm. Although not particularly set, it is favorable for the lower limit of the thickness to be not less than 0.1 mm. This is to ensure the electrical insulation of each ceramic substrate. Herein, thickness refers to the dimension in a direction connecting the ceramic substrate upper surface part and the ceramic substrate lower surface part.

It is favorable for the thickness of the ceramic green sheet treated by the double-sided treatment device according to the embodiment to be not more than 1 mm. The strength is increased when the ceramic green sheet is thick. When, however, the release agent is adhered to a thick ceramic green sheet and dried, cracks easily occur in the surface due to bending forces. It is favorable for the thickness of the ceramic green sheet to be not more than 0.8 mm, and more favorably not more than 0.6 mm.

When the ceramic green sheet is thin, the strength of the ceramic green sheet is low, and the ceramic green sheet is easily damaged. Therefore, handling of the ceramic green sheet is not easy. According to the embodiment of the invention, the release agent can be adhered to such a thin ceramic green sheet while suppressing damage of the ceramic green sheet.

To obtain multiple ceramic substrates by overlaying and sintering the ceramic green sheet, it is favorable for the release agent adhered to the ceramic green sheet to be a substance that is stable even at high temperatures when sintering and does not react easily with the ceramic substrate. Boron nitride (BN) is an example of a typical release agent adhered to the ceramic green sheet. Boron nitride can be adhered by dispersing a boron nitride powder in water or an organic solvent.

A double-sided treatment device according to an embodiment will now be described with reference to the accompanying drawings.

FIG. 1 is a plan view of the double-sided treatment device 1 according to the embodiment. FIG. 2 is a cross-sectional view of the double-sided treatment device 1 according to the embodiment shown in FIG. 1. In FIGS. 1 and 2, 2 is a ceramic green sheet. In the example shown in FIGS. 1 and 2, the ceramic green sheet 2 is conveyed horizontally into one side of the double-sided treatment device 1 and is conveyed out horizontally from the same side. Therefore, a sheet feeder, a sheet accumulator, etc., can be connected to one side of the double-sided treatment device 1. The sheet feeder, the double-sided treatment device 1, and the sheet accumulator can be efficiently arranged together.

As shown in FIGS. 1 and 2, the double-sided treatment device 1 includes a first roller part 6, a second roller part 7, and roller parts 11a to 11g. These roller parts are rotatable by the drive force of a motor or the like and convey the ceramic green sheet 2 by the rotation. The double-sided treatment device 1 also includes nip rollers 12a to 12d. The nip rollers 12a to 12d are idler wheels that do not have a function of rotating with a drive force.

For example, the ceramic green sheet 2 is continuously fed toward the double-sided treatment device 1 from a sheet forming machine or the like, which is not illustrated. The ceramic green sheet 2 that is fed to the double-sided treatment device 1 sequentially contacts the roller parts 11a to 11e. Specifically, the roller part 11a changes the movement direction of the ceramic green sheet 2 from a horizontal direction to a downward direction. The roller part 11b changes the movement direction from the downward direction to a horizontal direction. The roller part 11c feeds the ceramic green sheet 2 in the horizontal direction. The nip roller 12a is located proximate to the roller part 11c and faces the roller part 11c. The nip roller 12a pinches the ceramic green sheet 2 between the nip roller 12a and the roller part 11c, and applies an appropriate pressure to the ceramic green sheet 2. Subsequently, the roller part 11d changes the movement direction of the ceramic green sheet 2 from the horizontal direction to the upward direction, and then the roller part 11e changes the movement direction from the upward direction to a horizontal direction. The nip roller 12b is located proximate to the roller part 11e and faces the roller part 11e. The nip roller 12b pinches the ceramic green sheet 2 between the nip roller 12b and the roller part 11e, and applies an appropriate pressure to the ceramic green sheet 2.

The ceramic green sheet 2 that is fed to the double-sided treatment device 1 is conveyed in the horizontal direction by a first conveyance mechanism 5 so that a first surface 2a of the ceramic green sheet 2 faces upward. The surface of the ceramic green sheet that faces upward at this time is the same as the surface that faces upward when conveyed to the double-sided treatment device 1. Also, by changing the positions of the roller parts and the nip rollers, the surface that faces downward when conveyed to the double-sided treatment device 1 can face upward when conveyed by the first conveyance mechanism 5. Also, the number of roller parts can be reduced to four or less, and for simplicity, the ceramic green sheet 2 also can be conveyed to the first conveyance mechanism 5 by one roller part or by a combination of one roller part and a nip roller. In contrast, six or more roller parts may be mounted to adjust the conveyance function.

In the illustrated example, the ceramic green sheet 2 is conveyed in the rightward direction in the page surface (an example of the first direction). The first conveyance mechanism 5 is a roller conveyor including multiple guide rollers 5a. Instead of guide rollers, the first conveyance mechanism 5 may include a belt conveyor. Each guide roller 5a is an idler wheel that does not have a function of rotating with a drive force, and rotates by following the movement of the ceramic green sheet 2. The ceramic green sheet 2 enters the first treatment part 3 while being conveyed by the first conveyance mechanism 5.

The first treatment part 3 includes a sprayer 3a and an enclosure 3b. The sprayer 3a sprays a liquid in which the release agent is dispersed. The enclosure 3b is arranged so that the sprayed release agent does not diffuse into the surroundings; and the sprayer 3a is located inside the enclosure 3b. An opening for conveying the ceramic green sheet 2 inward and an opening for conveying the ceramic green sheet 2 outward are formed in the lower part of the enclosure 3b. The sprayer 3a sprays the release agent toward the ceramic green sheet 2 conveyed in through the opening. The ceramic green sheet 2 that is wet with the adhered liquid is conveyed out through the other opening.

The ceramic green sheet 2 to which the release agent is adhered moves to a first drying part 4 and is dried. The first drying part 4 includes a blower 4a and an enclosure 4b. The blower 4a blows air toward the ceramic green sheet 2. The blower 4a has the function of warming air, and may blow warm air toward the ceramic green sheet 2. Instead of the blower 4a, a heater that irradiates infrared or the like on the ceramic green sheet 2 may be provided. An opening for conveying the ceramic green sheet 2 inward and an opening for conveying the ceramic green sheet 2 outward are formed in the lower part of the enclosure 4b. The ceramic green sheet 2 that is wet due to the treatment of the first treatment part 3 is conveyed in through the opening of the enclosure 4b and dried by the blower 4a. The ceramic green sheet 2 that is dried is conveyed out through the other opening.

The dried ceramic green sheet 2 contacts the first roller part 6. The first roller part 6 changes the movement direction of the ceramic green sheet 2 from the horizontal direction to the upward direction (an example of the second direction). The ceramic green sheet 2 that moved in the upward direction contacts the second roller part 7. The second roller part 7 changes the movement direction of the ceramic green sheet 2 from the upward direction to a horizontal direction (the leftward direction in the page surface). At this time, the movement direction of the ceramic green sheet 2 after the change by the second roller part 7 is the reverse of the movement direction of the ceramic green sheet 2 before the change by the first roller part 6; and 2 reaches a state in which a second surface 2b faces upward. In other words, the first and second surfaces 2a and 2b of the ceramic green sheet 2 are vertically inverted by the first roller part 6 and the second roller part 7. Also, the nip roller 12c is located proximate to the second roller part 7 and faces the second roller part 7. The nip roller 12c pinches the ceramic green sheet 2 between the nip roller 12c and the second roller part 7, and applies an appropriate pressure to the ceramic green sheet 2.

The ceramic green sheet 2 that is fed in the horizontal direction by the second roller part 7 is then conveyed in the horizontal direction by a second conveyance mechanism 8. The second conveyance mechanism 8 is a roller conveyor including multiple guide rollers 8a. Each guide roller 8a is an idler wheel that does not have a function of rotating with a drive force, and rotates by following the movement of the ceramic green sheet 2. The ceramic green sheet 2 enters a second treatment part 9 while being conveyed by the second conveyance mechanism 8.

Similarly to the first treatment part 3, the second treatment part 9 includes a sprayer 9a and an enclosure 9b. The sprayer 9a sprays a liquid in which the release agent is dispersed. The sprayer 9a sprays the release agent toward the ceramic green sheet 2 conveyed in through an opening of the enclosure 9b. The ceramic green sheet 2 that is wet with the adhered liquid is conveyed out through another opening of the enclosure 9b. The ceramic green sheet 2 to which the release agent is adhered moves into a second drying part 10 and is dried. Similarly to the first drying part 4, the second drying part 10 includes a blower 10a and an enclosure 10b. The blower 10a dries the ceramic green sheet 2 by blowing air toward the ceramic green sheet 2. The ceramic green sheet 2 that is wet due to the treatment of the second treatment part 9 is conveyed in through the opening of the enclosure 10b and dried by the blower 10a. The dried ceramic green sheet 2 is conveyed out through another opening of the enclosure 10b.

The dried ceramic green sheet 2 is discharged from the double-sided treatment device 1. The movement direction of the discharged ceramic green sheet 2 is changed from the horizontal direction to the downward direction by the roller part 11f. Then, the ceramic green sheet 2 is moved in an obliquely downward direction by a sheet guide 14. The ceramic green sheet 2 that moved in the downward direction is moved in an obliquely upward direction by a guide roller 13a. Subsequently, the ceramic green sheet 2 is fed in a horizontal direction by the nip roller 12d and the roller part 11g.

The components of the double-sided treatment device 1 described above are directly or indirectly mounted to a frame 16. The frame 16 is a member that forms the contour of the double-sided treatment device 1 and has the role of supporting the structure of the entire device.

In the double-sided treatment device 1, the roller parts, nip rollers, guide rollers, sheet guides, etc., other than the first roller part 6 and the second roller part 7 are not necessarily provided in the illustrated quantities, and may be added or omitted as appropriate. At least some of the multiple guide rollers 5a or at least some of the multiple guide rollers 8a may be replaced with roller parts that include motors, etc.

In the first treatment part 3 and the second treatment part 9 of the example above, the release agent is adhered to the ceramic green sheet 2 by spraying. The release agent is not limited to the example; and the release agent may be adhered to the surface of the ceramic green sheet 2 by a roll coater, a brush, etc. However, in order to adhere more uniformly while reducing the adhesion amount of the release agent, spraying is most favorable.

Also, the first drying part 4 and the second drying part 10 may be omitted if the ceramic green sheet 2 can be sufficiently dried without including the first drying part 4 and the second drying part 10. For example, if dry air is circulated in the space in which the ceramic green sheet 2 is conveyed, etc., the ceramic green sheet 2 can be dried without including the first drying part 4 and the second drying part 10. However, the inventor found by investigations that the warp or waviness of the ceramic green sheet can be suppressed more by reducing the time from the adhesion of the release agent to the ceramic green sheet 2 until the release agent dries. Therefore, to suppress the warp or waviness of the ceramic green sheet, it is favorable to include the first drying part 4 and the second drying part 10 and reduce the time that the ceramic green sheet 2 is wet.

In the example shown in FIG. 2, the ceramic green sheet 2 is conveyed into the lower part of the double-sided treatment device 1 in a horizontal direction, and is conveyed outward from the upper part of the double-sided treatment device 1 in a horizontal direction. The configuration of the double-sided treatment device 1 according to the embodiment is not limited to the example. For example, the ceramic green sheet 2 may be conveyed into the upper part of the double-sided treatment device 1 in a horizontal direction and conveyed outward from the lower part of the double-sided treatment device 1 in a horizontal direction. In such a case, the positions of the treatment part and the drying part may be the reverse of those of the example shown in FIG. 2, or the conveyance direction of the ceramic green sheet 2 may be the reverse of that of the example shown in FIG. 2, or the arrangement or number of the roller parts, etc., may be modified. Or, the ceramic green sheet 2 may be conveyed into or outward from the double-sided treatment device 1 in a vertical direction. In such a case, such a configuration can be accommodated by modifying the position or number of the roller parts, etc. The ceramic green sheet 2 may be conveyed inward along one of a horizontal direction or a vertical direction; and the ceramic green sheet 2 may be conveyed outward along the other of the horizontal direction or the vertical direction.

FIGS. 3 and 4 show another double-sided treatment device according to an embodiment. FIG. 3 is a plan view of another double-sided treatment device 1a according to the embodiment. FIG. 4 is a cross-sectional view of the double-sided treatment device 1a according to the embodiment shown in FIG. 3. In the double-sided treatment device 1a, the ceramic green sheet 2 is conveyed horizontally into one side; and the ceramic green sheet 2 is conveyed out horizontally from the other side. Therefore, the sheet feeder, the double-sided treatment device 1a, the sheet accumulator, etc., can be arranged linearly.

In the double-sided treatment device 1a shown in FIGS. 3 and 4, the ceramic green sheet 2 is continuously fed from a sheet forming machine, etc., that are not illustrated. The ceramic green sheet 2 is fed in a horizontal direction by a guide roller 13b and a guide roller 13c. The ceramic green sheet 2 that moved in the horizontal direction contacts the roller part 11a; and the movement direction of the ceramic green sheet 2 is changed downward. Subsequently, the movement direction of the ceramic green sheet 2 is changed to a horizontal direction by the roller part 11b. The ceramic green sheet 2 that moved in the horizontal direction passes between a roller part 11h and a nip roller 12e and is conveyed toward a third conveyance mechanism 15 of the double-sided treatment device 1a.

The third conveyance mechanism 15 is a roller conveyor including multiple guide rollers 15a. The third conveyance mechanism 15 conveys the ceramic green sheet 2 in a horizontal direction (leftward in the page surface). A roller part 11i (a third roller part) is located at the end part of the third conveyance mechanism 15. The ceramic green sheet 2 that is conveyed by the third conveyance mechanism 15 is moved in the upward direction by the roller part 11i. Subsequently, the ceramic green sheet 2 passes between a roller part 11j (a fourth roller part) and the nip roller 12b and is conveyed toward the first conveyance mechanism 5. The first conveyance mechanism 5 conveys the ceramic green sheet 2 in a horizontal direction (rightward in the page surface). In other words, the movement direction of the ceramic green sheet 2 is inverted by the roller part 11i, the roller part 11j, and the nip roller 12b.

The configuration and treatment after the first conveyance mechanism 5 of the double-sided treatment device 1a may be the same as the configuration and treatment after the first conveyance mechanism 5 of the double-sided treatment device 1. In other words, the first conveyance mechanism 5 is a roller conveyor including the multiple guide rollers 5a. The ceramic green sheet 2 is conveyed with the first surface 2a facing upward. While being conveyed, the ceramic green sheet 2 enters the first treatment part 3; and the release agent is adhered to the first surface 2a by the sprayer 3a. The ceramic green sheet 2 to which the release agent is adhered is dried by the first drying part 4.

The ceramic green sheet 2 to which the release agent is adhered is moved upward by the first roller part 6, and then is moved in a horizontal direction (the leftward direction in the page surface) by the second roller part 7. The nip roller 12c for pressing the ceramic green sheet is located at the second roller part 7.

The ceramic green sheet 2 that is fed in the horizontal direction by the second roller part 7 is conveyed by the second conveyance mechanism 8 with the second surface 2b facing upward. The second conveyance mechanism 8 is a roller conveyor including the multiple guide rollers 8a. While being conveyed, the ceramic green sheet 2 enters the second treatment part 9; and the release agent is adhered to the second surface 2b by the sprayer 9a. The ceramic green sheet 2 to which the release agent is adhered is dried by the second drying part 10.

The ceramic green sheet 2 that has the release agent adhered to two surfaces is conveyed downward by the roller part 11f. The ceramic green sheet 2 that moved downward is moved in an obliquely downward direction by the sheet guide 14. Subsequently, the ceramic green sheet 2 passes between the roller part 11g and the nip roller 12d and is fed in a horizontal direction.

In the double-sided treatment device 1a, the roller parts, nip rollers, guide rollers, sheet guides, etc., other than the first roller part 6 and the second roller part 7 are not necessarily provided in the illustrated quantities, and may be added or omitted as appropriate. At least some of the multiple guide rollers 5a, at least some of the multiple guide rollers 8a, or at least some of the multiple guide rollers 15a may be replaced with roller parts including motors, etc.

In the example shown in FIG. 4, the ceramic green sheet 2 is conveyed into the lower part of the double-sided treatment device 1 horizontally from the right side, and is conveyed outward from the upper part of the double-sided treatment device 1 horizontally toward the left side. The configuration of the double-sided treatment device 1a according to the embodiment is not limited to the example. For example, the ceramic green sheet 2 may be conveyed into the upper part of the double-sided treatment device 1 horizontally at one of the right side or the left side, and may be conveyed outward from the lower part of the double-sided treatment device 1 horizontally at the other of the right side or the left side. Or, the ceramic green sheet 2 may be conveyed into and conveyed outward from the double-sided treatment device 1 in vertical directions. In such a case, such a configuration can be accommodated by modifying the positions or number of the roller parts, etc. The ceramic green sheet 2 may be conveyed inward along one of a horizontal direction or a vertical direction; and the ceramic green sheet 2 may be conveyed outward along the other of the horizontal direction or the vertical direction.

Also, in the example shown in FIG. 4, the third conveyance mechanism 15 conveys the ceramic green sheet 2 before adhering the release agent. The third conveyance mechanism 15 is not limited to the example; and the third conveyance mechanism 15 may convey the ceramic green sheet 2 after the release agent is adhered. In such a case, the third conveyance mechanism 15 may be located above the second conveyance mechanism 8. In such a case, such a configuration can be accommodated by modifying the positions or number of the roller parts, etc. In addition to the third conveyance mechanism 15, another conveyance mechanism also may be added to vertically invert or modify the movement direction of the ceramic green sheet 2.

As another example other than FIGS. 1 to 4, the first conveyance mechanism 5 may convey the ceramic green sheet 2 in the upward direction (an example of the first direction); and the second conveyance mechanism 8 may convey the ceramic green sheet 2 in the downward direction. In such a case, the first treatment part 3 sprays the release agent onto the first surface 2a of the ceramic green sheet 2 moving in the upward direction; and the first drying part 4 dries the ceramic green sheet 2 moving in the upward direction. The second treatment part 9 sprays the release agent onto the second surface 2b of the ceramic green sheet 2 moving in the downward direction; and the second drying part 10 dries the ceramic green sheet 2 moving in the downward direction. The installation area of the double-sided treatment device can be reduced when the ceramic green sheet 2 moves in vertical directions in the double-sided treatment device. Accordingly, to reduce the installation area, it is effective to convey the ceramic green sheet 2 along vertical directions. On the other hand, when the ceramic green sheet 2 is treated while being conveyed in vertical directions, the release agent that is sprayed onto the surface of the ceramic green sheet 2 may move downward. There is a possibility that the liquid may agglomerate, and uneven adhesion of the release agent may occur at the surface of the ceramic green sheet 2. Accordingly, in order to more uniformly adhere the release agent to the ceramic green sheet 2, it is effective to convey the ceramic green sheet 2 along horizontal directions.

FIG. 5 is a schematic view showing an example of spraying. As shown in FIG. 5, the sprayer 3a and the sprayer 9a include a spray gun 18 and a spray gun moving part 19. In the example shown in FIG. 5, the ceramic green sheet 2 is conveyed depthward into the page. As shown by the arrow, the spray gun 18 performs a swiveling motion (pivoting) to the left and right. At this time, the rotation axis of the spray gun 18 is parallel to the conveyance direction of the ceramic green sheet 2. The spray gun 18 has a swiveling motion around the conveyance direction. In the example shown in FIG. 5, the spray gun 18 swivels substantially 90 degrees. As a result, the release agent is sprayed widely within the range surrounded with broken lines. The release agent that is sprayed from the spray gun 18 is adhered to the surface of the ceramic green sheet 2.

The spray gun moving part 19 moves the spray gun 18 in the left and right directions in the page surface (an example of third directions). For example, the spray gun moving part 19 includes an actuator such as a motor, an air cylinder, etc., and moves the spray gun 18 to the left and right with the drive force of the actuator. In the example shown in FIG. 5, the spray gun moving part 19 moves the spray gun 18 back and forth to the left and right from center -> right -> center -> left. The spray gun 18 swivels while reciprocating to the left and right. Because the spray gun 18 moves to the left and right and performs a swiveling motion, the release agent also can be adhered uniformly to the end parts of the ceramic green sheet 2.

FIG. 6 is a schematic view showing another example of spraying. In the example shown in FIG. 6, the ceramic green sheet 2 is conveyed depthward into the page. The spray gun moving part 19 moves the spray gun 18 to the left and right and moves the spray gun 18 back and forth to the left and right from center -> right -> center -> left. The orientation of the spray gun 18 is fixed in the vertical direction; and a swiveling motion such as that of FIG. 5 is not performed. The release agent that is sprayed from the spray gun is adhered to the surface of the ceramic green sheet 2. By fixing the spray gun, the amount of the release agent that is not adhered to the ceramic green sheet 2 can be reduced.

According to the double-sided treatment device according to the embodiment, the ceramic green sheet 2 can be favorably treated. For example, conventionally, the release agent had been adhered to two surfaces of the ceramic green sheet 2 by manually flipping the ceramic green sheet 2 after cutting the ceramic green sheet 2. In contrast, according to the double-sided treatment device according to the embodiment, the release agent can be adhered to two surfaces of the ceramic green sheet 2 while inverting the surfaces of the ceramic green sheet 2 with the first conveyance mechanism 5, the first roller part 6, the second roller part 7, and the second conveyance mechanism 8.

Furthermore, in recent years, there is a tendency for the ceramic green sheet 2 to be formed to be thin as the ceramic substrate is thinned. When the ceramic green sheet 2 is thin, creases and wrinkles occur easily in the ceramic green sheet 2. To prevent the occurrence of creases and wrinkles, it is desirable to apply tension to the ceramic green sheet 2. However, because the strength of the ceramic green sheet 2 is low, the ceramic green sheet 2 breaks easily when a large tension is applied to the ceramic green sheet 2. In the double-sided treatment device according to the embodiment, nip rollers are provided for at least some of the roller parts to apply the appropriate tension to the ceramic green sheet 2 and prevent the occurrence of creases, wrinkles, etc. By providing the nip roller and by pinching the ceramic green sheet 2 with the roller part and the nip roller, the occurrence of creases, wrinkles, etc., can be suppressed without applying an excessive tension to the ceramic green sheet 2.

A specific example of processes for using the double-sided treatment device according to the embodiment to adhere a release agent to a ceramic green sheet will now be described. Here, an example will be described in which a boron nitride powder is adhered to a green sheet made of silicon nitride.

For example, a silicon nitride green sheet is fed to the double-sided treatment device shown in FIGS. 1 and 2 from a feeding device, which is not illustrated, such as a sheet forming machine, a sheet feeder, etc.

The silicon nitride green sheet is conveyed toward the roller part 11a by guide rollers. There may be one, three, or more guide rollers according to the configuration of the device to be connected. Multiple guide rollers may be located below the silicon nitride green sheet so that the silicon nitride green sheet is placed on top.

The silicon nitride green sheet is fed downward by the roller part 11a, and then is fed in a horizontal direction by the roller part 11b. Then, the silicon nitride green sheet is pulled in a state in which pressure is applied to the silicon nitride green sheet by the nip roller 12a and the roller part 11c. The silicon nitride green sheet is fed upward by the roller part 11d. Then, the silicon nitride green sheet is pulled in a state in which pressure is applied to the silicon nitride green sheet by the nip roller 12b and the roller part 11e. The silicon nitride green sheet is fed in a horizontal direction and conveyed toward the first conveyance mechanism 5.

While being conveyed by the first conveyance mechanism 5, the silicon nitride green sheet passes through the first treatment part 3. The double-sided treatment device 1 adheres the release agent to the surface of the silicon nitride green sheet. The release agent is a boron nitride solution in which boron nitride is dispersed in water. For example, the boron nitride solution is made by dispersing 20 to 30 weight% of boron nitride relative to the weight of water in water. The boron nitride solution is fed to the sprayer 3a by a hose or the like that is not illustrated. The sprayer 3a adheres the boron nitride solution to the upper surface (the front surface) of the silicon nitride green sheet by spraying the boron nitride solution downward. The sprayer 3a can adhere the boron nitride solution uniformly to the front surface of the silicon nitride green sheet by spraying while reciprocating in a horizontal direction perpendicular to the conveyance direction. It is noted that the direction of the sprayer 3a reciprocating is not necessarily exactly perpendicular to the conveyance direction and may be, for example, a reciprocating motion of the sprayer 3a in a direction oblique to the conveyance direction and the horizontal direction.

The speed of the reciprocating motion of the sprayer 3a is adjusted according to the conveyance speed of the silicon nitride green sheet, the concentration of the boron nitride solution, etc. When the double-sided treatment device is connected to a sheet forming machine, the conveyance speed changes according to the forming speed of the silicon nitride green sheet. In other words, when the silicon nitride green sheet is thin, the conveyance speed is high because the forming can be fast. When the silicon nitride green sheet is thick, the conveyance speed is low because the forming is slow. When the conveyance speed is high, it is favorable for the reciprocating speed of the sprayer 3a to be high. When the conveyance speed is low, it is favorable for the reciprocating speed of the sprayer 3a to be low. The conveyance speed may be set according to the concentration of the boron nitride solution. For example, when the concentration of the boron nitride solution is low within the concentration range described above, it is favorable for the reciprocating speed of the sprayer 3a to be low. When the concentration of the boron nitride solution is high within the concentration range described above, it is favorable for the reciprocating speed of the sprayer 3a to be high. The adjustment described above refers to when the amount sprayed from the sprayer 3a is constant. When the sprayer 3a has a function of adjusting the sprayed amount, the sprayed amount may be adjusted according to the conveyance speed or the concentration of the solution without modifying the reciprocating speed.

The silicon nitride green sheet to which the boron nitride solution is adhered is conveyed to the first drying part 4. Natural drying or heated drying is performed in the first conveyance mechanism 5. In natural drying, dry air is fed to the first drying part 4 and suctioned by a duct, etc. As a result, the moisture is evaporated and dried, and the boron nitride powder remains adhered to the surface of the silicon nitride green sheet. In heated drying, the moisture is evaporated by feeding heated air, or by heating with a heater mounted inside the enclosure 4b. Although the cost can be reduced with natural drying, the time necessary for drying lengthens. It is necessary for the first drying part 4 to be longer in the conveyance direction of the silicon nitride green sheet. In contrast, in heated drying, a heating cost is incurred, but the time for drying can be reduced.

The silicon nitride green sheet that is conveyed outward from the first drying part 4 is fed in the upward direction by the first roller part 6 at the termination part of the first conveyance mechanism 5. Furthermore, the silicon nitride green sheet is fed in a horizontal direction by the second roller part 7 and the nip roller 12c. At this time, the surface (the back surface) opposite to the surface to which the boron nitride is adhered becomes the upper surface. The second conveyance mechanism 8 conveys the silicon nitride green sheet in the opposite direction of the first conveyance mechanism 5.

Similarly to the first conveyance mechanism 5, the boron nitride solution is sprayed on the silicon nitride green sheet; and the silicon nitride green sheet is dried. The silicon nitride green sheet to which the boron nitride is adhered is conveyed to the end part of the second conveyance mechanism 8 and fed in substantially the downward direction by the roller part 11f. Subsequently, the silicon nitride green sheet is separated from the end part of the second conveyance mechanism 8 by the sheet guide 14 and conveyed out by the roller part 11g and the nip roller 12d.

As long as the release agent can be adhered to two surfaces of the ceramic green sheet 2, the thickness and amount of the release agent adhered by the first treatment part 3 and the thickness and amount of the release agent adhered by the second treatment part 9 are settable as appropriate. Favorably, the thickness of the release agent adhered to the first surface 2a by the first treatment part 3 is greater than the thickness of the release agent adhered to the second surface 2b by the second treatment part 9. The release agent that is adhered by the first treatment part 3 is dried not only by the first drying part 4 but also by the second drying part 10. Therefore, even when the release agent is adhered to be thicker on the first surface 2a than the second surface 2b, the release agent of the first surface 2a can be dried sufficiently. Also, by making the release agent adhered to the second surface 2b thin, the time necessary to dry the release agent can be reduced. As a result, the time necessary for the treatment of the ceramic green sheet 2 can be reduced, and the production efficiency of the ceramic green sheet 2 can be increased.

For example, the multiple ceramic green sheets 2 are stacked and sintered after cutting the ceramic green sheet 2. At this time, the multiple ceramic green sheets 2 are stacked so that the first surface 2a to which the relatively thick release agent is adhered and the second surface 2b to which the relatively thin release agent is adhered are in contact. As a result, the ceramic green sheets 2 can be more easily separated from each other after sintering.

Here, a case is described where a boron nitride solution is adhered to a silicon nitride green sheet. Embodiments of the invention are not limited to the example, and are applicable when the release agent is adhered to other ceramic green sheets as well.

FIG. 7 is a flowchart showing a method for producing a sintered body according to an embodiment. FIGS. 8A to 8E are cross-sectional views showing production processes of the sintered body according to the embodiment. The double-sided treatment device according to the embodiment is favorably used to produce sintered bodies made of ceramics. First, a raw material powder of a ceramic and a sintering aid are mixed. The sintering aid includes an oxide of a rare-earth element, magnesium, titanium, hafnium, etc. A raw material slurry is made by adding an organic binder to the mixed raw materials and by degassing (step S1). As shown in FIG. 8A, the ceramic green sheet 2 is made by forming the raw material slurry (step S2). It is favorable to use a doctor blade technique in the sheet forming. The doctor blade technique can produce large, thin green sheets, which improves the suitability for mass production.

As shown in FIG. 8B, the release agent 20 is adhered to each of the first and second surfaces 2a and 2b of the ceramic green sheet 2 (step S3). The double-sided treatment device according to the embodiment is used to adhere the release agent 20. As shown in FIG. 8C, the ceramic green sheet to which the release agent 20 is adhered is cut to a prescribed size with a cutter, etc. (step S4).

As shown in FIG. 8D, the cut ceramic green sheets 2 are stacked inside a sintering container 21 (step S5). The sintering container 21 is made from boron nitride, etc., and includes, for example, a setter 22 and a setter 23. The setter 22 is arranged along a horizontal direction; and the setter 23 is arranged along a vertical direction. Arranged in a space surrounded with multiple setters 22 and multiple setters 23.

Dewaxed bodies are made by heating the stacked ceramic green sheets at a temperature of not more than 1,000 °C (step S6). It is favorable for the atmosphere of the dewaxing process to be an inert atmosphere such as nitrogen gas, argon gas, etc. An oxygen-containing atmosphere in which an inert atmosphere contains oxygen may be used. The dewaxed bodies are sintered at a temperature of not less than 1,600 °C and not more than 2,000 °C (step S7). It is favorable for the interior of the sintering furnace to be a pressurized atmosphere. Dewaxing and sintering may be performed continuously inside the same sintering container. The stacked sintered bodies are separated from each other; and the release agent is removed by honing, etc. (step S8). The sintered body is made by the processes described above. In the example shown in FIG. 8E, a ceramic substrate 2C is made as the sintered body.

When the ceramic substrate 2C is produced as the sintered body, surface processing such as polishing or the like of the surfaces of the sintered body are performed as necessary. When the ceramic substrate 2C is to be used as a circuit board, a process of bonding metal plates or the like to the ceramic substrate 2C also may be performed.

Embodiments of the invention include the following features.

### Feature 1

A double-sided treatment device configured to adhere a release agent to two surfaces of a ceramic green sheet, the double-sided treatment device comprising:
a first conveyance mechanism configured to move the ceramic green sheet in a first direction;
a first treatment part configured to adhere the release agent to a first surface of the ceramic green sheet conveyed by the first conveyance mechanism;
a first roller part located at an end part in the first direction of the first conveyance mechanism, the first roller part being configured to change a movement direction of the ceramic green sheet to a second direction crossing the first direction;
a second roller part configured to change the movement direction of the ceramic green sheet that moved in the second direction to an opposite direction of the first direction;
a second conveyance mechanism configured to move the ceramic green sheet in the opposite direction; and
a second treatment part configured to adhere the release agent to a second surface of the ceramic green sheet conveyed by the second conveyance mechanism.

### Feature 2

The double-sided treatment device according to Feature 1, further comprising:
a first drying part configured to dry the release agent adhered to the first surface; and
a second drying part configured to dry the release agent adhered to the second surface.

### Feature 3

The double-sided treatment device according to any one of Feature 1 or Feature 2, wherein
the second roller part includes a rotation axis perpendicular to the first and second directions and is configured to rotate around the rotation axis, and
the double-sided treatment device further comprises a nip roller configured to face the second roller part and press the ceramic green sheet.

### Feature 4

The double-sided treatment device according to any one of Features 1 to 3, wherein
the first treatment part adheres the release agent to the first surface while reciprocating in a third direction perpendicular to the first and second directions, or while pivoting around the first direction, and
the second treatment part adheres the release agent to the second surface while reciprocating in the third direction, or while pivoting around the opposite direction.

### Feature 5

The double-sided treatment device according to any one of Features 1 to 4, further comprising:
a third conveyance mechanism configured to move the ceramic green sheet in the opposite direction;
a third roller part located at an end part in the opposite direction of the third conveyance mechanism, the third roller part being configured to change the movement direction of the ceramic green sheet from the opposite direction to the second direction; and
a fourth roller part configured to change the movement direction of the ceramic green sheet that moved in the second direction to the first direction toward the first conveyance mechanism.

### Feature 6

The double-sided treatment device according to any one of Features 1 to 5, wherein
the first treatment part is configured to spray the release agent toward the first surface, and
the second treatment part is configured to spray the release agent toward the second surface.

### Feature 7

A double-sided treatment method using the double-sided treatment device according to Feature 1, the double-sided treatment method comprising:
conveying the ceramic green sheet to the first conveyance mechanism;
adhering the release agent to the first surface by using the first treatment part;
adhering the release agent to the second surface by using the second treatment part; and
conveying the ceramic green sheet outward from the second conveyance mechanism.

### Feature 8

The double-sided treatment method according to Feature 7, wherein
a thickness of the release agent adhered to the first surface by the first treatment part is greater than a thickness of the release agent adhered to the second surface by the second treatment part.

### Feature 9

The double-sided treatment method according to any one of Feature 7 or Feature 8, wherein
the ceramic green sheet includes silicon nitride, aluminum nitride, or aluminum oxide.

### Feature 10

The double-sided treatment method according to any one of Features 7 to 9, wherein
a thickness of the ceramic green sheet is not more than 1 mm.

### Feature 11

A method for producing a sintered body, the method comprising:
performing the double-sided treatment method according to any one of Features 7 to 10;
cutting the ceramic green sheet having the release agent adhered to the first and second surfaces; and
overlaying and sintering the cut ceramic green sheets.

While certain embodiments of the invention have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. Furthermore, the embodiments above can be implemented in combination with each other.

### Reference Numeral List

1 double-sided treatment device
2 ceramic green sheet
2a first surface of ceramic green sheet
2b second surface of ceramic green sheet
3 first treatment part
3a sprayer
3b enclosure
4 first drying part
4a blower
4b enclosure
5 first conveyance mechanism
5a guide roller
6 first roller part
7 second roller part
8 second conveyance mechanism
8a guide roller
9 second treatment part
9a sprayer
9b enclosure
10 second drying part
10a blower
10b enclosure
11a, 11b, 11c, 11d, 11e, 11f, 11g, 11h roller part
12a, 12b, 12c, 12d, 12e nip roller
13a, 13b, 13c guide roller
14 sheet guide
15 third conveyance mechanism
15a guide roller
16 frame
18 spray gun
19 spray gun moving part
20 release agent
21 sintering container
22, 23 setter

## Claims

1. A double-sided treatment device configured to adhere a release agent to two surfaces of a ceramic green sheet, the double-sided treatment device comprising:
a first conveyance mechanism configured to move the ceramic green sheet in a first direction;
a first treatment part configured to adhere the release agent to a first surface of the ceramic green sheet conveyed by the first conveyance mechanism;
a first roller part located at an end part in the first direction of the first conveyance mechanism, the first roller part being configured to change a movement direction of the ceramic green sheet to a second direction crossing the first direction;
a second roller part configured to change the movement direction of the ceramic green sheet that moved in the second direction to an opposite direction of the first direction;
a second conveyance mechanism configured to move the ceramic green sheet in the opposite direction; and
a second treatment part configured to adhere the release agent to a second surface of the ceramic green sheet conveyed by the second conveyance mechanism.

2. The double-sided treatment device according to claim 1, further comprising:
a first drying part configured to dry the release agent adhered to the first surface; and
a second drying part configured to dry the release agent adhered to the second surface.

3. The double-sided treatment device according to either claim 1 or 2, wherein
the second roller part includes a rotation axis perpendicular to the first and second directions and is configured to rotate around the rotation axis, and
the double-sided treatment device further comprises a nip roller configured to face the second roller part and press the ceramic green sheet.

4. The double-sided treatment device according to either claim 1 or 2, wherein
the first treatment part adheres the release agent to the first surface while reciprocating in a third direction perpendicular to the first and second directions, or while pivoting around the first direction, and
the second treatment part adheres the release agent to the second surface while reciprocating in the third direction, or while pivoting around the opposite direction.

5. The double-sided treatment device according to either claim 1 or 2, further comprising:
a third conveyance mechanism configured to move the ceramic green sheet in the opposite direction;
a third roller part located at an end part in the opposite direction of the third conveyance mechanism, the third roller part being configured to change the movement direction of the ceramic green sheet from the opposite direction to the second direction; and
a fourth roller part configured to change the movement direction of the ceramic green sheet that moved in the second direction to the first direction toward the first conveyance mechanism.

6. The double-sided treatment device according to either claim 1 or 2, wherein
the first treatment part is configured to spray the release agent toward the first surface, and
the second treatment part is configured to spray the release agent toward the second surface.

7. A double-sided treatment method using the double-sided treatment device according to claim 1, the double-sided treatment method comprising:
conveying the ceramic green sheet to the first conveyance mechanism;
adhering the release agent to the first surface by using the first treatment part;
adhering the release agent to the second surface by using the second treatment part; and
conveying the ceramic green sheet outward from the second conveyance mechanism.

8. The double-sided treatment method according to claim 7, wherein a thickness of the release agent adhered to the first surface by the first treatment part is greater than a thickness of the release agent adhered to the second surface by the second treatment part.

9. The double-sided treatment method according to either claim 7 or 8, wherein
the ceramic green sheet includes silicon nitride, aluminum nitride, or aluminum oxide.

10. The double-sided treatment method according to either claim 7 or 8, wherein
a thickness of the ceramic green sheet is not more than 1 mm.

11. A method for producing a sintered body, the method comprising:
performing the double-sided treatment method according to claim 7;
cutting the ceramic green sheet having the release agent adhered to the first and second surfaces; and
overlaying and sintering the cut ceramic green sheets.
